# EUROPEAN PATENT APPLICATION

(11) **EP 3 550 703 A1**
(43) Date of publication of application: **09.10.2019**
(21) Application number: 19161503.8
(22) Date of filing: 08.03.2019
(51) Int. Cl.: H02M 1/00, H02M 3/158, H02M 7/5387, H02J 5/00, H02J 7/02, H02J 7/04, H02J 7/14

(54) **DC-AC CONVERTER AND METHOD OF DC-AC CONVERSION**

(30) Priority: 04.04.2018 GB 201805517
(71) Applicant: Rolls-Royce plc, London SW1E 6AT (GB)
(72) Inventor: Gajanayake, Chandana, Derby, Derbyshire DE24 8BJ (GB)
(74) Representative: Rolls-Royce plc

(57) **Abstract**

A DC-AC converter and a method of performing the same. The converter comprising: a DC-DC stage, which is operable to convert DC power receive from an input DC source by changing the voltage of the received DC power; a DC-AC stage, which is operable to receive the converted DC power from the DC-DC stage, convert it to AC power with one or more phases, and provide the AC power to a load at an output of the DC-AC stage; a positive rail and a negative rail which extend in parallel from the DC-DC stage to the DC-AC stage; and a controller, which is operable to control the DC-DC stage. The DC-DC stage comprises: a first DC-DC stage switch, an inductor, and a second DC-DC stage switch connected in series in that order, where the first DC-DC stage switch is connectable to a positive side of the input DC source and the second DC-DC stage switch is connectable to a zero side of the input DC source, the positive rail connecting to a first side of the inductor such that current flows unidirectionally from the inductor to the positive rail and the negative rail connecting to a second side of the inductor such that current flows unidirectionally from the negative rail to the inductor; and a zero rail extending in parallel to the positive rail and the negative rail, being connectable to the zero side of the input DC source, and being connected in series to the first DC-DC stage switch, the inductor and the second DC-DC stage switch. The DC-AC stage comprises: a plurality of DC-AC stage switches connected between the positive rail and the negative rail and operable to produce the one or more phases of AC power at the output of the DC-AC stage. The DC-AC converter further comprises a neutral rail which is connected to the DC-DC stage zero rail and provides a reference voltage for the one or more phases of AC power. The controller is configured to operate the first DC-DC stage switch and second DC-DC stage switch so as to balance the voltage on the positive rail and the voltage on the negative rail such that the reference voltage is a zero reference voltage.

## Description

### Technical field

The present disclosure relates to a DC-AC converter and method of DC-AC conversion.

### Background

With an increase in the electrical loads and power levels required by aircraft electrical distribution systems, there is a preference to utilize DC power distribution systems in order to reduce weight and provide flexibility. Generally, aircraft DC power distribution systems use either 270V DC or +/- 270V DC as provided from starter generators/generators that are connected to a gas turbine via a gearbox arrangement. The generators are operated at a variable frequency and variable voltage, and the generated AC power is converted into DC power and provided into a DC power distribution system. However, many aircraft electrical loads require 115V AC or 230V AC in a 4-wire configuration. These loads are typical of aircraft which generate AC power at a fixed frequency of 400Hz.

As will be understood, as distribution systems move away from AC and towards DC, these loads must be fed from a DC distribution system using a power converter. However, it is not possible to directly convert 270V DC to 115V AC, nor +/- 270V DC to 230V AC using a voltage source converter.

Conventionally, a three-phase converter cell can be connected to a step up transformer to increase the voltage and provide a neutral connection. Received 270 V DC may be converted to 90 V AC, and then stepped up using a transformer where the secondary coil of the transformer is connected in a Y-configuration so as to provide a neutral wire for the 4 wire AC load. However, this requires a bulky transformer which increases the size and weight of the electrical distribution system and therefore reduces the overall power density.

### Summary

The present disclosure provides a DC-AC converter, a method of DC-AC conversion, and an aircraft electrical distribution system as set out in the appended claims.

In general terms, the present disclosure provides a converter configuration which achieves both a voltage changing (e.g. boosting) function and a neutral point balancing function.

Accordingly, in a first aspect, the present disclosure provides a DC-AC converter comprising:
a DC-DC stage, which is operable to convert DC power received from an input DC source by changing the voltage of the received DC power;
a DC-AC stage, which is operable to receive the converted DC power from the DC-DC stage, convert it to AC power with one or more phases, and provide the AC power to a load at an output of the DC-AC stage;
a positive rail and a negative rail which extend in parallel from the DC-DC stage to the DC-AC stage; and
a controller, which is operable to control the DC-DC stage;
wherein the DC-DC stage comprises:
   a first DC-DC stage switch, an inductor, and a second DC-DC stage switch connected in series in that order, where the first DC-DC stage switch is connectable to a positive side of the input DC source and the second DC-DC stage switch is connectable to a zero side of the input DC source, the positive rail connecting to a first side of the inductor such that current flows unidirectionally from the inductor to the positive rail and the negative rail connecting to a second side of the inductor such that current flows unidirectionally from the negative rail to the inductor; and
   a zero rail extending in parallel to the positive rail and the negative rail, being connectable to the zero side of the input DC source, and being connected in series to the first DC-DC stage switch, the inductor, and the second DC-DC stage switch;
wherein the DC-AC stage comprises:
a plurality of DC-AC stage switches connected between the positive rail and the negative rail and operable to produce the one or more phases of AC power at the output of the DC-AC stage;
wherein the DC-AC converter further comprises a neutral rail which is connected to the DC-DC stage zero rail and provides a reference voltage for the one or more phases of AC power; and
wherein the controller is configured to operate the first DC-DC stage switch and second DC-DC stage switch so as to balance the voltage on the positive rail and the voltage on the negative rail such that the reference voltage is a zero reference voltage.

By providing a connection between the zero rail of the DC-DC stage and the output neutral rail of the DC-AC stage, the controller can be operated to balance the voltage on the positive rail and the voltage on the negative rail so that the effects of unbalance in the DC-AC stage are minimized. Moreover, the connection between the neutral rail of the DC-AC converter and the DC-DC stage zero rail allows the DC-DC stage zero rail to function as the neutral point in the DC-AC converter. Advantageously, this reduces the number of components necessary to implement DC-AC conversion, as no separate or dedicated neutral point or neutral point circuit is required and unwanted harmonics can be avoided in the output AC power. Furthermore, the converter can avoid the bulk and weight associated with the use of a transformer.

The following optional features are applicable singly or in any combination with the DC-AC converter of the first aspect of the disclosure.

One possibility for ensuring that current flows unidirectionally from the inductor to the positive rail, and unidirectionally from negative rail to the inductor is for a first diode to be connected between the inductor and the positive rail, and a second diode to be connected between the inductor and the negative rail. Another possibility is for a third DC-DC stage switch to be connected between the inductor and the positive rail, and a fourth DC-DC stage switch to be connected between the inductor and the negative rail. These third and fourth stage switches can similarly ensure the unidirectional current flow, but also allow the DC-AC converter to be operated in reverse, i.e. to allow current to flow from an AC source to a DC load.

The DC-DC stage may further include a first capacitor, connected between the positive rail and the zero rail, and a second capacitor, connected between the negative rail and the zero rail.

The DC-AC stage may comprise three pairs of DC-AC stage switches, each pair being operable to produce a respective phase of a three-phase AC power at the output of the DC-AC stage.

The positive rail may be connected to a side of the inductor which is adjacent to the second DC-DC stage switch, e.g. through the first diode or third DC-DC stage switch, and the negative rail may be connected to a side of the inductor which is adjacent to the first DC-DC stage switch, e.g. through the second diode of the fourth DC-DC stage switch.

The DC-AC converter may include a further inductor connected in series between the neutral rail of the DC-AC stage and the zero rail of the DC-DC stage.

The received DC power may have a voltage of 270V, and the DC-DC stage may be operable to provide a 160V voltage to the positive rail and a -160V voltage to the negative rail, and the DC-AC stage may be operable to convert the converted DC power to 115V AC.

In a second aspect, the present disclosure provides a method of DC-AC conversion, comprising:
converting received DC power to a DC power of a different voltage, using a DC-DC stage which includes a first DC-DC stage switch connected in series with an inductor and a second DC-DC stage switch;
converting the DC power to AC power, using a DC-AC stage, a positive rail and a negative rail extending in parallel from the DC-DC stage to the DC-AC stage, and the DC-AC stage including a neutral rail connected to a zero rail of the DC-DC stage to provide a reference voltage for one or more phases of the converted AC power, the zero rail of the DC-DC stage extending in parallel between the positive rail and the negative rail, being connected to a zero side of an input DC source, and being connected in series with the first DC-DC stage switch and the second DC-DC stage switch; and
balancing the voltage on the positive and negative rails, by operating the first DC-DC stage switch and the second DC-DC stage switch to provide a zero reference voltage on the neutral rail.

Conveniently, the method may be implemented using the DC-AC converter of the first aspect.

The following optional features are applicable singly or in any combination with the method of the second aspect of the disclosure.

One of the DC-DC stage switches may be operated so as to have a longer duty cycle as compared to the other of the DC-DC stage switches.

The step of balancing the voltage on the neutral rail may include the sub-steps of: measuring a voltage on the positive rail and a voltage on the negative rail; comparing the measured voltages to a predetermined voltage; and operating the first and second DC-DC stage switches based on the comparison. The step of balancing the voltage on the neutral may include the sub-steps of: measuring a total voltage output of the DC-DC stage; comparing the measured total voltage to a predetermined voltage; and operating the first and second DC-DC stage switches based on the comparison.

The DC-DC stage may operate in a boost mode, so as to convert the received DC power by: closing the first DC-DC stage switch and second DC-DC stage switch, to thereby charge the inductor; and opening both the first DC-DC stage switch and the second DC-DC stage switch, to allow the inductor to discharge.

The DC-DC stage may operate in a buck mode, so as to convert the received DC power by: closing the first DC-DC stage switch, to thereby charge one side of the inductor; opening the first DC-DC stage switch, and closing the second DC-DC stage switch, to thereby charge the other side of the inductor; and opening the second DC-DC stage switch, to allow the inductor to discharge.

In a third aspect, the present disclosure provides an aircraft electrical distribution system which includes the DC-AC converter according to the first aspect.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments of the disclosure will now be described by way of example with reference to the accompanying drawings in which:
**Figure 1** shows a DC-AC converter according to the present disclosure;
**Figure 2** shows an implementation of a controller according to the present disclosure;
**Figure 3** shows a variant implementation of a controller according to the present disclosure;
**Figures 4A- 4D** show modulation methods according to the present disclosure;
**Figure 5** shows a variant DC-AC converter according to the present disclosure; and
**Figure 6** shows an implementation of a DC-AC converter according to the present disclosure within an aircraft electrical distribution system.

### Detailed description

Aspects and embodiments of the present disclosure will now be discussed with reference to the accompanying figures. Further aspects and embodiments will be apparent to those skilled in the art.

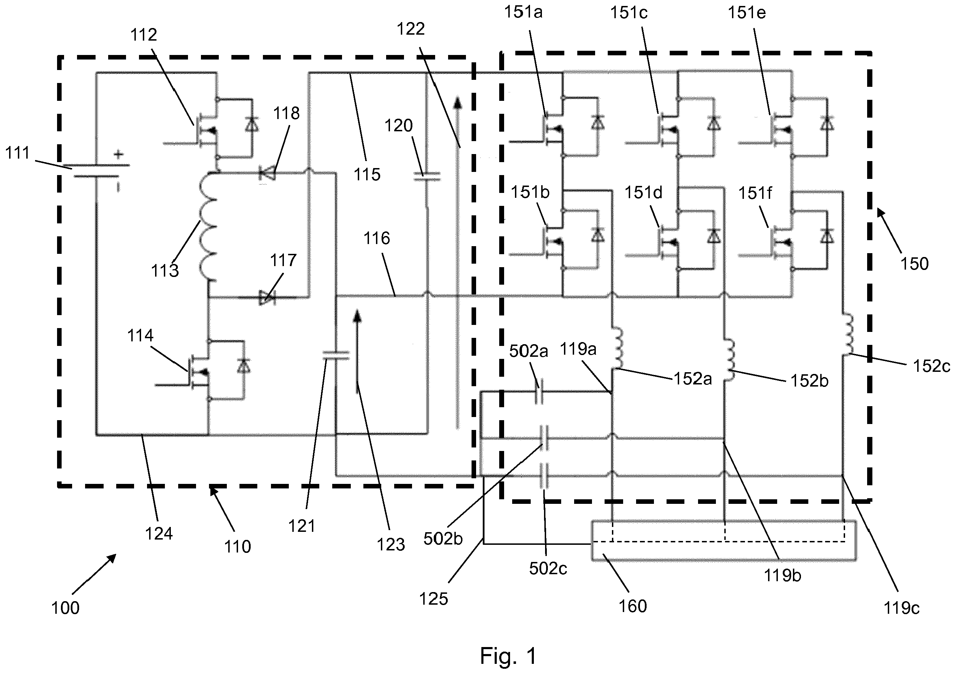

**Figure 1** shows a DC-AC converter 100 according to the present disclosure. The converter broadly contains two parts: a DC-DC stage 110, and a DC-AC stage 150. The DC-DC stage includes a DC supply or source 111, which provides DC power to be converted. One side of the DC supply or source (indicated by +) is considered a positive side, and the other side of the DC supply or source (indicated by -) is considered a zero side. The DC-DC stage also includes a first DC-DC stage switch 112, an inductor 113, and a second DC-DC stage switch 114 which are connected in series in that order. The DC-DC stage also includes diodes 117, 118 connecting the two sides of the inductor to positive 115 and negative 116 rails respectively of the DC-DC stage. That is, from a positive terminal of the DC supply 111, the previously listed components are connected in series such that the provided DC power passes first through the first switch (depending on whether it is open or closed), then through the inductor, and finally through the second switch (depending on whether it is open or closed). The first DC-DC stage switch may be referred to as S_{D1}, and the second DC-DC stage switch may be referred to as S_{D2}. The first and second DC-DC stage switches have diodes connected in anti-parallel. In other examples where diodes 117 and 118 are replaced by active switches, the diodes connected in anti-parallel with the DC-DC stage switches enable the device to be operated in reverse. The first and second DC-DC stage switches are controlled via a controller (not shown in Figure 1).

With this arrangement it is possible to charge the inductor 113 by providing DC power to it from the DC source 111. Once the inductor is charged, the DC-DC stage switches 112 and 114 can be operated so as to provide a converted DC power onto a positive rail 115 and a negative rail 116. It is important to note that whilst charging the inductor one side holds a positive voltage and the other side holds a negative voltage. However, when the inductor is discharged (via operation of the switches) the voltage across the inductor 'flips' such that the side which initially has a positively oriented voltage now has a negatively oriented voltage, and the side which previously has a negatively oriented voltage is now has a positively oriented voltage. The DC-DC stage is therefore able to generate two outputs having respectively positive and negative voltage magnitudes as compared to a zero voltage rail (e.g. ground point) of the input DC voltage. Connected between the positive rail and the inductor is a first diode 117, and connected between the negative rail and the inductor is a second diode 118. These diodes ensure that current flows in the correct direction into the positive or negative rail.

In the above-mentioned other examples, which are not illustrated, the diodes 117, 118 are replaced or supplemented with third and fourth DC-DC stages switches such that the DC-AC converter can be operated in reverse. In this way, rather than receiving DC power and providing AC power, it is possible to operate the DC-AC converter so as to receive AC power (at the DC-AC stage) and provide DC power (from the DC-DC stage).

The switches are operated so as to provide a voltage 122 on the positive rail and a voltage 123 to be provided on the negative rail. These voltages are a potential difference between the respective rail and a zero rail 124, which is at zero potential. In one example, the voltage 122 on the positive rail is 160 V and the voltage 123 on the negative rail is -160 V. Capacitor 120 is connected between the positive rail 115 and the zero rail 124, and capacitor 121 is connected between the negative rail 116 and the zero rail 124.

The positive rail 115 and negative rail 116 are shared by the DC-AC stage 150. Connected in parallel therebetween are DC-AC stage switches 151a-151f. These switches can be considered in pairs, e.g. 151a and 151b; 151c and 151d; and 151e and 151f. These pairs are operable to provide an AC voltage, to a load 160 which is connected to the output of the DC-AC stage. By operating the pairs of switches in the appropriate manner, it is possible to provide a three-phase AC voltage to the load. In some examples, the switches are operated with pulsed width modulated switching signals. The outputs of the DC-AC converter may have an LC filter or LCL filter to filter out any harmonic components. In the example of Figure 1, an LC filter is formed by three pairs of a series-connected inductor 152a, 152b, 152c and capacitor 502a, 502b, 502c. The three capacitors 502a, 502b, 502c are connected on one side to their inductors 152a, 152b, 152c at respective output points 119a, 119b, 119c of the DC-AC converter, and on the other side to the zero rail 124. The load 160 is also connected at the output points of the DC-AC converter 119a, 119b, 119c. A neutral rail 125 connects the output points of the DC-AC converter to the zero rail 125 of the DC-DC stage.

Under unbalanced loads, in order to provide an output AC voltage without unbalancing the DC voltage within the DC-DC stage 110, the zero rail 125 is maintained at a zero voltage by operating the first and second DC-DC stage switches 112 and 114 as discussed below. Thus the AC neutral connection and the DC ground terminals are effectively one and the same. This can reduce the number of wires needed in this part of the electrical distribution system.

Considering the switches 112 and 114 in more detail, generally there are four switching states available in the DC-DC stage:
(1) Both switches 112 and 114 are closed, and therefore diodes 117 and 118 are in a non-conducting state;
(2) Both switches 112 and 114 are open, and therefore diodes 117 and 118 are in a conducting state;
(3) Switch 112 is closed and switch 114 is open, and therefore diode 117 is in a non-conducting state and diode 118 is in a conducting state; and
(4) Switch 112 is open and switch 114 is closed, and therefore diode 117 is in a conducting state and diode 118 is in a non-conducting state.

These switching states are used to control the output voltage of the DC-DC stage in any of three operation modes: buck mode, in which the voltage is decreased and the current is increased; boost mode, in which the voltage is increased and the current is decreased; or balance mode, in which the voltage on the positive rail and the voltage on the negative rail are balanced (but opposed).

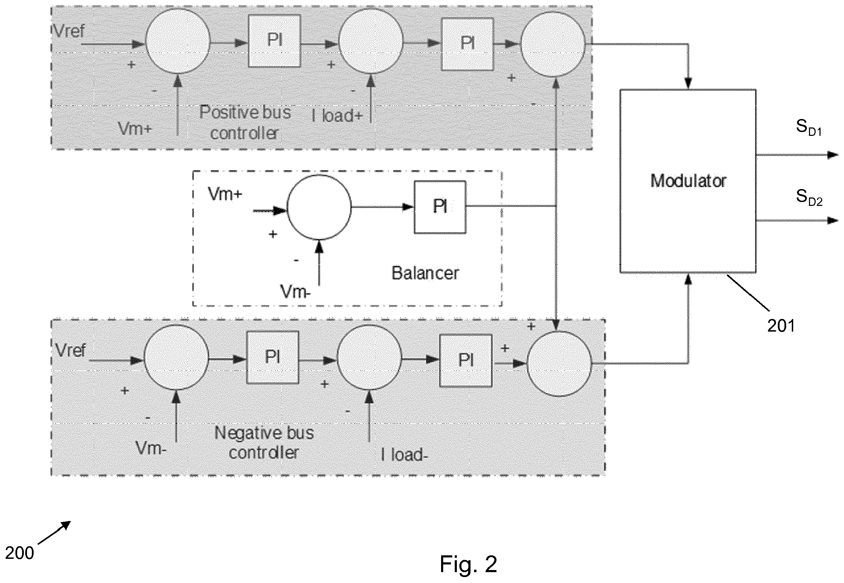

**Figure 2** shows a control scheme for a controller 200 according to the present disclosure. According to the control scheme, the voltages on both the positive 115 and negative 116 rails are measured and controlled by proportional-integral (PI) controllers. Each of the positive and negative bus controllers shown include an outer voltage loop responsible for maintaining the neutral rail 125 at a zero voltage and an inner current loop which improves the response time. The positive bus controller compares the measured voltage Vm₊ on the positive rail to a predetermined reference voltage Vref. The negative bus controller compares the measured voltage Vm₋ on the negative rail to a predetermined reference voltage Vref. The difference between the measured voltages and the reference voltages for the positive and negative rails are then compared using a balancer controller, which determines a difference between the zero voltage desired on the neutral rail and the actual voltage present. This difference is then fed to both the positive and negative bus controllers so as to maintain the neutral rail at a zero voltage and drive the error (the difference between the actual voltage on the neutral rail and the desired zero voltage) towards zero. The controller 200 outputs are fed into a modulator 201, which generates switching signals for the first and second DC-DC stage switches 112, 114.

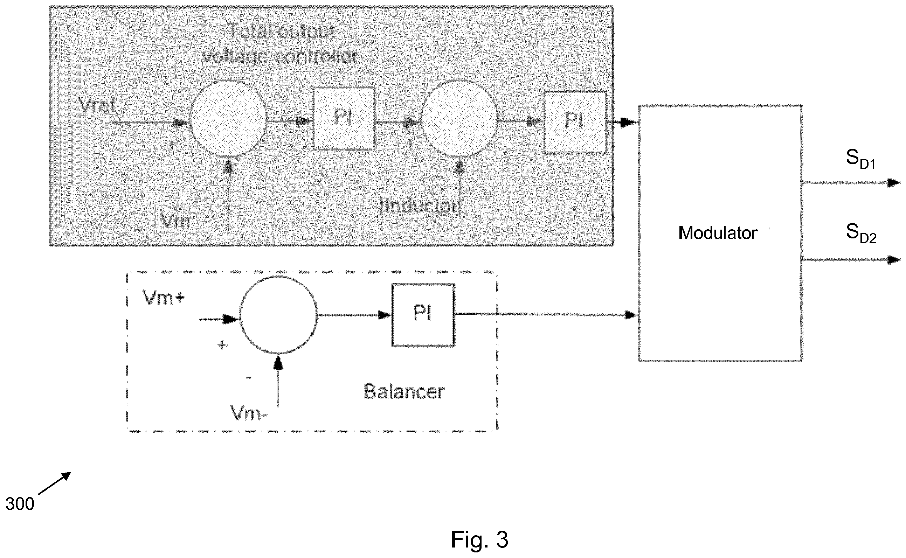

A variant controller 300 is shown in **Figure 3****,** which, in contrast to the example shown in Figure 2, has only a single outer voltage loop controller which is supplemented with the inner loop controller. Here, the total output voltage of the DC-DC stage is measured and compared to a reference voltage by a PI controller. This signal is provided to the modulator in addition to a signal from the balancer circuit, which is derived from a difference between the voltages on the positive and negative rails. The modulator then generates the appropriate switching signals for the first and second DC-DC stage switches.

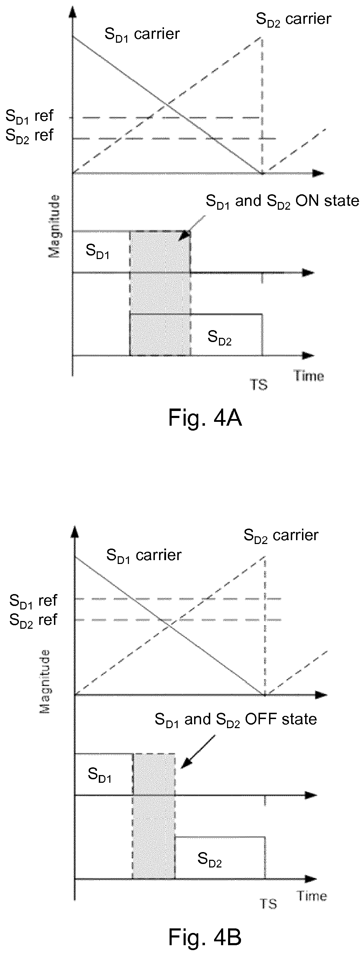

Figures 4A - 4D illustrate the generation of switching signals under two schemes. The first, shown in Figures 4A and 4B, is a scheme where separate carrier signals for the first and second DC-DC stage switches (S_{D1} and S_{D2}) are interleaved or shifted by 180°. When the S_{D1} carrier signal is larger than a reference signal for S_{D1} (S_{D1} ref), the second switch S_{D1} is switched on (i.e. closed) and it will then be switched off (i.e. opened) when the carrier signal is smaller than the reference signal S_{D1} ref. Similarly, when the S_{D2} carrier signal is larger than a reference signal for the S_{D2} (S_{D2} ref), switch S_{D2} is switched on (i.e. closed) and it will be switched off (i.e. opened) when the S_{D2} carrier signal is smaller than the reference signal S_{D1} ref.

If the output voltage of the DC-DC stage requires boosting (i.e. an increase in the generated voltage), then both reference signals (S_{D1} ref & S_{D2} ref) are increased by setting a higher reference voltage. This results in an increase in the time during which the switches are on (i.e. an increase in the duty cycle), and an increase in the time where both switches are switched on simultaneously. This is most clearly shown in the lower part of **Figure 4A****.**

In contrast, if the output voltage of the DC-DC stage requires a buck operation (i.e. a reduction in total voltage) both reference signals (S_{D1} ref & S_{D2} ref) are reduced by setting a lower reference voltage. This results in a reduction of the time during which the switches are on (i.e. a decrease in the duty cycle), and also provides a time during which both switches are switched off simultaneously. This is most clearly shown in the lower part of **Figure 4B****.**

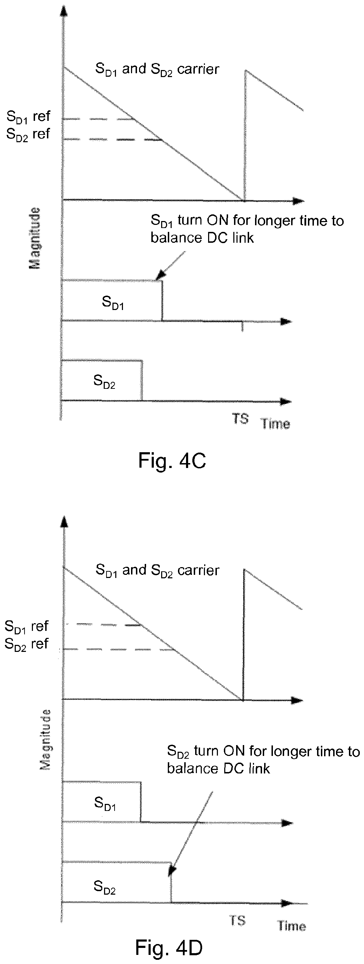

Under the second scheme, shown in **Figures 4C and 4D****,** both S_{D1} and S_{D2} use the same carrier signal: S_{D1} and S_{D2} carrier. When the carrier signal is larger than a reference signal for the first switch, S_{D1} ref, the first switch is switched on (i.e. closed) and it will switch off (i.e. open) when the carrier signal is smaller than the reference signal S_{D1} ref. Similarly, when the carrier signal is larger than a reference signal for the second switch, S_{D2} ref, the second switch is switched on (i.e. closed) and it will switch off (i.e. open) when the carrier signal is smaller than the reference signal S_{D2} ref.

Under both schemes, voltage balancing is performed by varying (e.g. increasing) one of the reference signals S_{D1} ref or S_{D2} ref to thereby vary the time during which one of the switches will be on relative to the other. However, in the second scheme, the balancing operation is not necessarily used as a main (i.e. dominant) state. The balancing operation may be used only when it is required to balance the voltages on the positive 115 and negative 116 rails, so as to provide a zero voltage on the neutral rail 125. Whereas, under the first scheme, the balancing operation is generally used as the main state of operation.

### Boost mode operation

By switching on both switches S_{D1} and S_{D2} contemporaneously, the inductor 113 is charged. While both switches are closed, diodes 117 and 118 operate to block the flow of current therethrough and therefore the voltages on the positive 115 and negative 116 rails are not affected and can continue to provide power to the load 160.

Subsequently, at least one or possibly both switches are switched to an off state i.e. opened. If both switches S_{D1} and S_{D2} are switched off at the same time, then both the positive 115 and negative 116 rails would charge in an equal manner. However, if the positive and negative rails have different voltage magnitudes the switches are controlled independently so as to change the duration of the switched on time of one switch relative to the other. This allows finer control of the voltages on the positive and negative rails. For example, if switch S_{D1} was switched on for a longer time as compared to switch S_{D2}, then the voltage on the positive rail would increase relative to the voltage on the negative rail. This can be achieved, for example, by charging capacitor 120 to a higher voltage than capacitor 121.

In an example where the DC source 111 provides 270V DC, it is possible to provide a voltage on the positive 115 and negative 116 rails of +/- 135V respectively by maintaining a duty cycle of the switches 112 and 114 at 50%. Alternatively, by maintaining a duty cycle of the switches 112 and 114 at 66%, a voltage on the positive and negative rails of +/- 270V respectively can be provided (or, said another way, the full voltage across both the positive and negative rails would be 540V).

### Buck mode operation

By using the DC-AC converter disclosed herein, buck mode operation can be achieved by the DC-DC stage with or without introducing a charging state where both S_{D1} and S_{D2} are switched on at the same time. If this charging state is to be used, it is similar to that discussed above with relation to the boost mode operation, where if the duty cycle is kept less than 66.6% then the voltages on the positive 115 and negative 116 rails in the above example should have a magnitude less than 270V.

If the charging state discussed above is not used, there are only three switching states possible for the DC-DC stage:
(1) S_{D1} is switched on, and S_{D2} is switched off; therefore diode 117 is in a nonconductive state and diode 118 is in a conducting state;
(2) S_{D1} is switched off, and S_{D2} is switched on; therefore diode 117 is in a conducting state and diode 118 is in a non-conducting state; and
(3) S_{D1} and S_{D2} are switched off; therefore diodes 117 and 118 are both in a conducting state and therefore energy stored in the inductor is discharged.

In order to charge the inductor, the states (1) and (2) are applied to the DC-DC stage switches 112 and 114. In state (3), if the voltages present on either side of the inductor are balanced the duty cycle is kept below 50%. Therefore in the above example the voltages on the positive 115 and negative 116 rails will have a magnitude of less than 135V (or, said another way, the total voltage across the rails will be less than 270V).

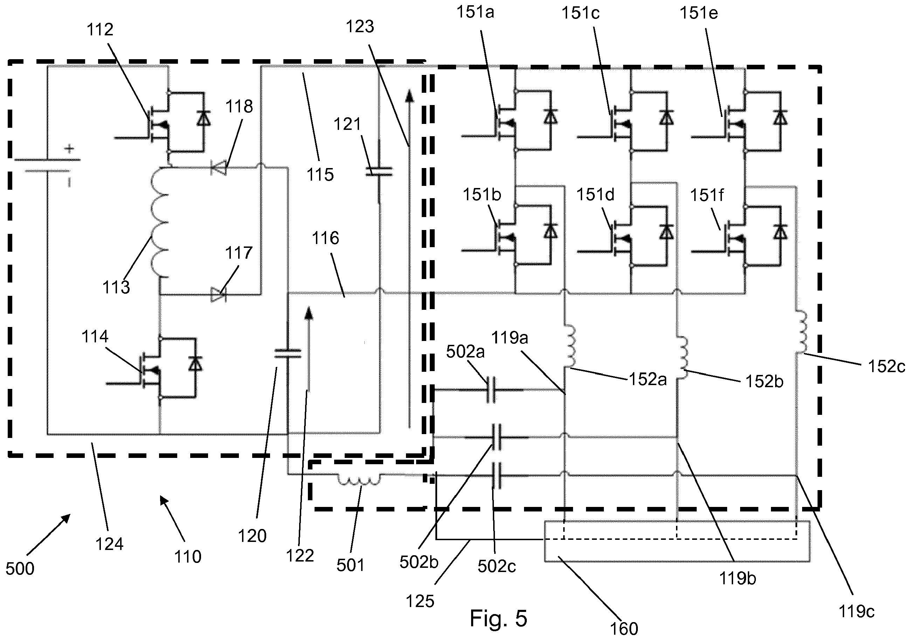

**Figure 5** shows a variant DC-AC converter 500 as compared to the converter 100 shown in Figure 1, where like features are indicated by like reference numerals. The converter 500 includes a further inductor 501, connecting the neutral rail 125 to the zero rail 124. This inductor can be referred to as a common mode inductor, and is shared between the three-phases. It operates to reduce noise which may be introduced to the system by the load 160.

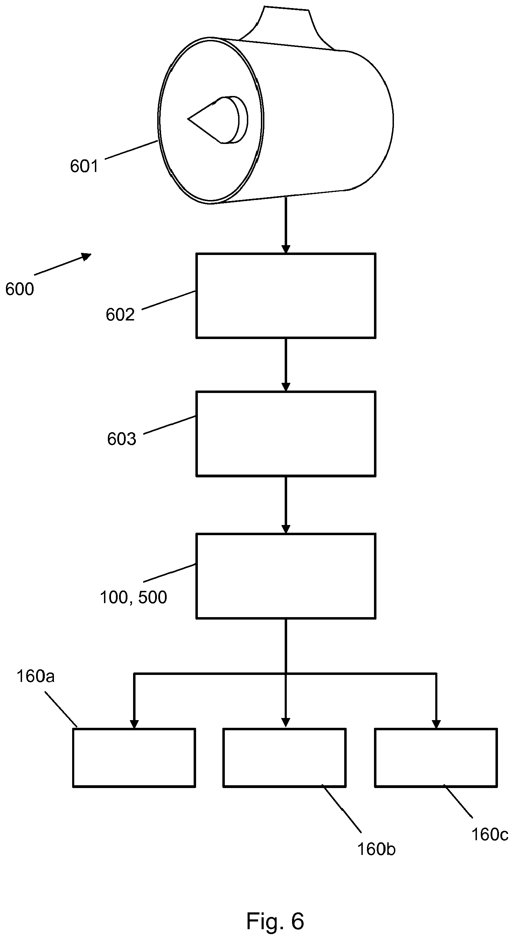

**Figure 6** shows an aircraft electrical distribution system 600, which includes an example of the DC-AC converters discussed above. A gas turbine 601, is connected and provides mechanical power to a generator 602 (e.g. a starter/generator). The generator produces an AC current, which is fed into rectifier 603. The rectifier 603 produces a DC power, which is transmitted throughout the aircraft via wiring. The DC power is provide to one or more DC-AC converters 100, 500, which invert the received DC power and provide AC power to one or more loads 160a-160c. The DC-AC converter discussed above is generally lighter and smaller than the transformer-based systems conventionally used for DC-AC conversion.

The DC-AC converter is described above in relation to an aircraft electrical distribution in which the DC source provides 270V DC. However, lower or higher source voltages can be used. Moreover, the source voltage can be a regulated voltage or a non-regulated (variable) DC voltage. Also the output voltages can be higher or lower than voltages conventionally used in aerospace systems.

More generally, the DC-AC converter can be used to integrate renewable generating system such as photovoltaic cells, fuel cells, wind turbines etc. into a power system or an islanded grid. If the converter is configured to operate bi-directionally, then it can be used to integrate battery or super capacitor energy storage systems.

Further DC-DC stages can be cascaded in the converter to achieve higher boost voltages relative to the source voltage.

In the controller 200, 300, hysteresis controllers or model predictive controllers can be used instead of PI controllers. Another possibility is to modify e.g. the inner loop controller of the controller 200 to implement feed forward control.

While the converter and method have been described in conjunction with the exemplary embodiments described above, many equivalent modifications and variations will be apparent to those skilled in the art when given this disclosure. Accordingly, the exemplary embodiments of the converter and method set forth above are considered to be illustrative and not limiting.

### List of features

- 100, 500: DC-AC converters
- 110: DC-DC stage
- 111: DC Supply
- 112: First DC-DC stage switch
- 113: Inductor
- 114: Second DC-DC stage switch
- 115: Positive rail
- 116: Negative rail
- 117: First diode
- 118: Second diode
- 119a-c: Output points of DC-AC converter
- 120: First capacitor
- 121: Second capacitor
- 122: Positive voltage
- 123: Negative voltage
- 124: Zero rail
- 125: Neutral rail
- 150: DC-AC stage
- 151a-151f: DC-AC stage switches
- 152a-152c: Inductors
- 160/160a-c: Load
- 200,300: Controller
- 501: Inductor
- 502a-502c: Capacitor
- 601: Gas turbine
- 602: Gearbox generator / generator

## Claims

1. A DC-AC converter (100) comprising:
a DC-DC stage (110), which is operable to convert DC power received from an input DC source by changing the voltage of the received DC power;
a DC-AC stage (150), which is operable to receive the converted DC power from the DC-DC stage, convert it to AC power with one or more phases, and provide the AC power to a load at an output of the DC-AC stage;
a positive rail (115) and a negative rail (116) which extend in parallel from the DC-DC stage to the DC-AC stage; and
a controller (200), which is operable to control the DC-DC stage;
wherein the DC-DC stage comprises:
a first DC-DC stage switch (112, S_{D1}), an inductor (113), and a second DC-DC stage switch (114, S_{D2}) connected in series in that order, where the first DC-DC stage switch is connectable to a positive side of the input DC source and the second DC-DC stage switch is connectable to a zero side of the input DC source, the positive rail (115) connecting to a first side of the inductor such that current flows unidirectionally from the inductor to the positive rail and the negative rail (116) connecting to a second side of the inductor such that current flows unidirectionally from the negative rail to the inductor; and
a zero rail (124) extending in parallel to the positive rail and the negative rail, being connectable to the zero side of the input DC source, and being connected in series with the first DC-DC stage switch, the inductor, and the second DC-DC stage switch;
wherein the DC-AC stage comprises:
a plurality of DC-AC stage switches (151a - 151f) connected between the positive rail and the negative rail and operable to produce the one or more phases of AC power at the output of the DC-AC stage;
wherein the DC-AC converter further comprises a neutral rail (125) which is connected to the DC-DC stage zero rail and provides a reference voltage for the one or more phases of AC power; and
wherein the controller is configured to operate the first DC-DC stage switch and second DC-DC stage switch so as to balance the voltage on the positive rail and the voltage on the negative rail such that the reference voltage is a zero reference voltage.

2. The DC-AC converter of claim 1, wherein a first diode (117) is connected between the inductor and the positive rail, and a second diode (118) is connected between the inductor and the negative rail.

3. The DC-AC converter of claim 1, wherein a third DC-DC stage switch is connected between the inductor and the positive rail, and a fourth DC-DC stage switch is connected between the inductor and the negative rail.

4. The DC-AC converter of any preceding claim, wherein the DC-DC stage further includes a first capacitor (120), connected between the positive rail and the zero rail, and a second capacitor (121), connected between the negative rail and the zero rail.

5. The DC-AC converter of any preceding claim, wherein the DC-AC stage comprises three pairs of DC-AC stage switches (151 a -151f), each pair being operable to produce a respective phase of a three-phase AC power at the output of the DC-AC stage.

6. The DC-AC converter of any preceding claim, wherein the positive rail is connected to a side of the inductor which is adjacent to the second DC-DC stage switch, and the negative rail is connected to a side of the inductor which is adjacent to the first DC-DC stage switch.

7. The DC-AC converter of any preceding claim, including a further inductor (501) connected in series between the neutral rail of the DC-AC stage and the zero rail of the DC-DC stage.

8. The DC-AC converter of any preceding claim, wherein the received DC power has a voltage of 270V, the DC-DC stage is operable to provide a 160V voltage to the positive rail and a -160V voltage to the negative rail, and the DC-AC stage is operable to convert the converted DC power to 115V AC.

9. A method of DC-AC conversion, comprising:
converting received DC power to a DC power of a different voltage, using a DC-DC stage which includes a first DC-DC stage switch connected in series with an inductor and a second DC-DC stage switch;
converting the DC power to AC power, using a DC-AC stage, a positive rail and a negative rail extending in parallel from the DC-DC stage to the DC-AC stage, and the DC-AC stage including a neutral rail connected to a zero rail of the DC-DC stage to provide a reference voltage for one or more phases of the converted AC power, the zero rail of the DC-DC stage extending in parallel between the positive rail and the negative rail, being connected to a zero side of an input DC source, and being connected in series with the first DC-DC stage switch and the second DC-DC stage switch; and
balancing the voltage on the neutral rail, by operating the first DC-DC stage switch and the second DC-DC stage switch to provide a zero reference voltage on the neutral rail.

10. The method of claim 9, wherein one of the DC-DC stage switches is operated so as to have a longer duty cycle as compared to the other of the DC-DC stage switches.

11. The method of claim 9 or 10, wherein the step of balancing the voltage on the neutral rail includes the sub-steps of:
measuring a voltage on the positive rail and a voltage on the negative rail;
comparing the measured voltages to a predetermined voltage; and
operating the first and second DC-DC stage switches based on the comparison.

12. The method of claim 9 or 10, wherein the step of balancing the voltage on the neutral rail includes the sub-steps of:
measuring a total output voltage of the DC-DC stage;
comparing the measured total voltage to a predetermined voltage; and
operating the first and second DC-DC stage switches based on the comparison.

13. The method of any one of claims 9 to 12, wherein the DC-DC stage operates in a boost mode, so as to convert the received DC power by:
closing the first DC-DC stage switch and second DC-DC stage switch, to thereby charge the inductor; and
opening both the first and second DC-DC stage switch, to allow the inductor to discharge.

14. The method of any one of claims 9 to 12, wherein the DC-DC stage operates in a buck mode, so as to convert the received DC power by:
closing the first DC-DC stage switch, to thereby charge one side of the inductor;
opening the first DC-DC stage switch and closing the second DC-DC stage switch, to thereby charge the other side of the inductor; and
opening the second DC-DC stage switch, to allow the inductor to discharge.

15. An aircraft electrical distribution system including the DC-AC converter of any one of claims 1 to 8.
